(19) Europäisches Patentamt
European Patent Office
Office européen des brevets

(11) EP 0 905 178 A1

(12) **EUROPEAN PATENT APPLICATION**

(43) Date of publication:
**31.03.1999 Bulletin 1999/13**

(51) Int Cl.6: **C08K 3/32**, C08K 13/02
// (C08K13/02, 3:32, 5:00)

(21) Application number: **98307824.7**

(22) Date of filing: **25.09.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.09.1997 JP 282678/97**

(71) Applicant: **GENERAL ELECTRIC COMPANY**
**Schenectady, NY 12345 (US)**

(72) Inventors:
- **Shimoda, Tomoaki**
  **Ichihara, Chiba (JP)**
- **Nagai, Takashi**
  **Otake City 739-06022972-1, Hiroshima Prf (JP)**
- **Ishiwa, Kenichi**
  **Oyama City 323-0021, Tochigi Prefecture (JP)**

(74) Representative: **Szary, Anne Catherine, Dr. et al**
**London Patent Operation,**
**GE International, Inc.,**
**Essex House,**
**12-13 Essex Street**
**London WC2R 3AA (GB)**

(54) **Aromatic polycarbonate resin composition**

(57) An aromatic polycarbonate resin composition having hydroxyl groups at its terminals, which has been thermally stabilized and also has excellent hydrolysis resistance comprises (A) 100 weight parts of an aromatic polycarbonate resin that contains hydroxyl groups in a proportion of at least 5% versus the total polymer terminal groups, and (B) at least 0.00001 weight part and less than 0.0002 weight part phosphorous acid.

EP 0 905 178 A1

**Description**

The present invention relates to a stabilized aromatic polycarbonate (hereinafter sometimes referred to as PC) resin composition having hydroxyl groups.

Because of their excellent transparency, aromatic polycarbonates are used in a wide range of applications, such as electronic parts, optical disks, lenses, and sheeting materials. In general, when an aromatic polycarbonate is molded and worked for use in a lens or optical disk, the working temperature thereof is about 300°C, the purpose of which is to reduce residual strain and achieve a smooth surface. Accordingly, this tends to cause problems such as discoloration of the finished product, and diminished product strength due to a lower molecular weight. Methods in which an aromatic polycarbonate is stabilized by blending a stabilizer, such as a phosphorus- or phenol-based antioxidant, into the aromatic polycarbonate have been proposed in the past to combat this problem. This stabilization is performed primarily for polycarbonates obtained by a phosgene process. As disclosed in Japanese Laid-Open Patent Application 59-12691, a combination of trace amounts of phosphorous acid (2 to 20 ppm) and a phosphorous ester (50 to 300 ppm) will stabilize these polycarbonates both thermally and hydrolytically. In addition to a method in which a polycarbonate is stabilized by the addition of trace amounts of phosphorus-based stabilizers, we also find examples in Japanese Laid-Open Patent Application 481457 (5 to 50 ppm of phosphorous acid) and Japanese Laid-Open Patent Application 1-284549 (5 to 100 ppm of phosphorous acid). Unfortunately, follow-up testing within these ranges for polycarbonates obtained by phosgene process has revealed that as the amount of added phosphorous acid increases, and particularly at an added amount of 5 ppm or greater, there is a marked deterioration in the hydrolysis resistance of the polycarbonate.

Compared to a polycarbonate obtained by the known phosgene process, a polycarbonate obtained by melt polymerization has a much smaller amount of residual chlorine because a chlorine-based solvent and phosgene are not used in the melt process. Such a polycarbonate is therefore suited to applications in which good transparency is important and with which there is little danger of residual chlorine having a detrimental effect on thermal stability or hydrolysis resistance. Nevertheless, since a melt process involves an ester interchange method for the polymerization, how termination is effected is often controlled by the molar ratio of the raw materials. Accordingly, hydroxyl groups originating in the raw materials are present in a proportion of a few percent in the structure. A polycarbonate with such hydroxyl groups at its terminals is stable enough so that there are no problems at all with respect to the short-term heat encountered in molding and working, but there is a latent problem in that these hydroxyl groups can react with impurities in the polycarbonate. For example, the impurities most likely to be found in a polycarbonate produced by a melt process are metal ions. However, since these metal ions often come from the raw materials, or the content thereof depends on the material of the reactor and so on, it is very difficult to eliminate them completely. In Japanese Laid-Open Patent Application 2-175722, the chlorine content and metal ions are specified for a polycarbonate produced by melt process, and in particular the purity of the raw materials is raised in order to improve resistance to hydrolysis. This method is effective not only for hydrolysis resistance, but also for thermal stability, and is important in terms of the stabilization of the melt process polycarbonate. There is a limit to the effect that this method will have, however, and there is a need for a better method for the stabilization of a melt process polycarbonate having hydroxyl terminal end groups.

An object of the present invention is to provide an aromatic polycarbonate resin composition having hydroxyl groups at its terminals, which has been thermally stabilized and also has excellent hydrolysis resistance.

As a result of much study aimed at solving these problems, the inventors arrived at the present invention upon discovering that a minute amount, preferably, less than 2 ppm, of phosphorous acid has an exceptional stabilization effect on a melt process polycarbonate having hydroxyl groups in which the impurity content is also minute from the outset.

Specifically, the present invention provides a polycarbonate resin composition containing (A) 100 weight parts of an aromatic polycarbonate resin that contains hydroxyl groups in a proportion of at least 5% of the total polymer terminal end groups and (B) at least 0.00001 weight part and less than 0.0002 weight part phosphorous acid.

It is preferable for the above-mentioned aromatic polycarbonate resin to be manufactured through a melt polymerization reaction between an aromatic dihydroxy compound and a carbonic diester. In the melt polymerization, an alkali metal compound or alkaline earth metal compound is typically used as a catalyst in an amount of $1 \times 10^{-8}$ to $1 \times 10^{-4}$ mol per mole of aromatic dihydroxy compound, and also to use a basic compound in an amount of $1 \times 10^{-6}$ to $1 \times 10^{-1}$ mol per mole of aromatic dihydroxy compound.

In the present invention, the (A) aromatic polycarbonate resin that contains hydroxyl groups in a proportion of at least 5% of the total polymer terminal end groups is an aromatic homopolycarbonate or copolycarbonate obtained by allowing an aromatic dihydroxy compound to react with a carbonate precursor. The aromatic polycarbonate may be branched. A branched polycarbonate is obtained by allowing a polyfunctional aromatic compound to react with an aromatic dihydroxy compound and a carbonate precursor, which yields a branched thermoplastic polycarbonate.

The method for manufacturing the above-mentioned polycarbonate is itself known. In specific terms, this

polycarbonate can be manufactured by allowing an aromatic dihydroxy compound and a carbonic diester to undergo an ester interchange reaction in a molten state.

There are no particular restrictions on the aromatic dihydroxy compound, and any of various known phenol-based compounds having hydroxyl groups can be used. Examples of such compounds are expressed by the formula:.

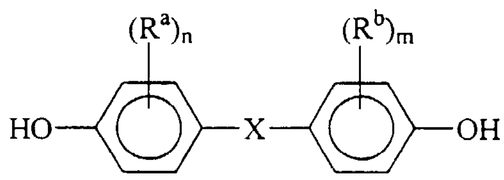

In the above formula, $R^a$ and $R^b$ are each independently selected from among a halogen atom, i.e., chlorine, bromine, fluorine or iodine, and an alkyl group with a carbon number of 1 to 8. When there are two or more of $R^a$ or $R^b$, that is, when n = 2 to 4 and/or m = 2 to 4, the various $R^a$ or $R^b$ groups may be the same or different. n and m are each an integer from 0 to 4, and X is selected from among a single bond, an alkylene group with a carbon number of 1 to 8, an alkylidene group with a carbon number of 2 to 8, a cycloalkylene group with a carbon number of 5 to 15, a cycloalkylidene group with a carbon number of 5 to 15, an -S-, -SO-, $-SO_2-$, -CO-, or -O- bond, and a bond expressed bv the formula:

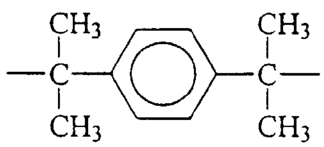

Specific examples of aromatic dihydroxy compounds include bis(4-hydroxyphenyl)methane, 1,1-bis(4-hydroxyphenyl)ethane, 1,2-bis(4-hydroxyphenyl)ethane, bis(4-hydroxyphenyl)diphenylmethane, 2,2-bis(4-hydroxyphenyl)propane, 2,2-bis(4-hydroxyphenyl)butane, 1,1-bis(4-hydroxyphenyl)cyclohexane, bis(3,5-dimethyl-4-hydroxyphenyl)methane, 1,1-bis(3,5-dimethyl-4-hydroxyphenyl)ethane, 1,2-bis(3,5-dimethyl-4-hydroxyphenyl)ethane, 2,2-bis (3,5-dimethyl-4-hydroxyphenyl) propane, 2,2-bis(3,5-dimethyl-4-hydroxyphenyl)butane, bis(3,5-dimethyl-4-hydroxyphenyl) phenylmethane, bis(3,5-dimethyl-4-hydroxyphenyl)diphenylmethane, bis(3,5-dichloro-4-hydroxyphenyl)methane, 2,2-bis(3,5-dichloro-4-hydroxyphenyl)methane, bis(3,5-dibromo-4-hydroxyphenyl)methane, 2,2-bis(3,5-dibromo-4-hydroxyphenyl)propane, and other such dihydroxyarylalkanes; bis(4-hydroxyphenyl)sulfone, bis(3,5-dimethyl-4-hydroxyphenyl) sulfone, bis(3,5-dibromo-4-hydroxyphenyl)sulfone, and other such dihydroxyarylsulfones; bis(4-hydroxyphenyl) ether, bis(3,5-dimethyl-4-hydroxyphenyl) ether, bis(3,5-dibromo-4-hydroxyphenyl) ether, and other such dihydroxyaryl ethers; bis(4-hydroxyphenyl) sulfide, bis(3,5-dimethyl-4-hydroxyphenyl) sulfide, bis(3,5-dibromo-4-hydroxyphenyl) sulfide, and other such dihydroxyaryl sulfides; 4,4'-dihydroxybenzophenone and other such dihydroxyaryl ketones; and bis(4-hydroxyphenyl) sulfoxide and other such sulfoxides. Of these, 2,2-bis(4-hydroxyphenyl)propane (generic name: bisphenol A) is preferred.

In addition to the above, it is also possible to use a compound expressed by the following formula:

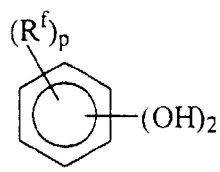

where the $R^f$ groups are each independently a hydrocarbon group with 1 to 10 carbon atoms, or a halide thereof, or a halogen atom, and p is an integer from 0 to 4 as the aromatic dihydroxy compound, examples of which include resorcinol and substituted resorcinols such as 3-methylresorcinol, 3-ethylresorcinol, 3-propylresorcinol, 3-butylresorcinol, 3-t-butylresorcinol, 3-phenylresorcinol, 3-cumylresorcinol, 2,3,4,6-tetrafluororesorcinol, and 2,3,4,6-tetrabromoresorcinol; catechols; hydroquinone and substituted hydroquinones such as 3-methylhydroquinone, 3-ethylhydroquinone, 3-propylhydroquinone, 3-butylhydroquinone, 3-t-butylhydroquinone, 3-phenylhydroquinone, 3-cumylhydroquinone,

2,3,5,6-tetramethylhydroquinone, 2,3,5,6-tetra-t-butylhydroquinone, 2,3,5,6-tetrafluorohydroquinone, and 2,3,5,6-tetrabromohydroquinone; and 2,2,2',2'-tetrahydro-3,3,3',3'-tetramethyl-1,1'-spirobis(1H-indene)-7,7'-diols expressed by the following formula:

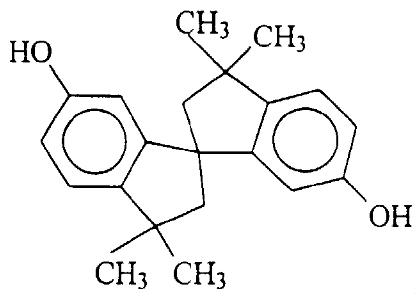

;

and a substituted indane bisphenol compound as taught in US Patent Number 5,703,197, expressly incorporated herein by reference, at column 6, lines 10 to 24, the most preferred species of which is 5-hydroxy-3-(4-hydroxyphenyl)-1,1,3-trimethylindane which gives a structure as set forth in the formula below

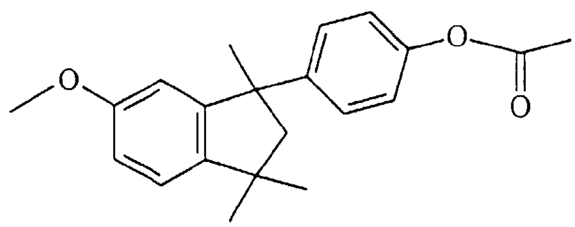

when incorporated into the polycarbonate copolymer.

These aromatic dihydroxy compounds may be used singly, or a combination of two or more types may be used.

There are no particular restrictions on the carbonic diester, and while examples include diphenyl carbonate, ditolyl carbonate, bis(chlorophenyl) carbonate, m-cresyl carbonate, dinaphthyl carbonate, bis(diphenyl) carbonate, diethyl carbonate, dimethyl carbonate, dibutyl carbonate, and dicyclohexyl carbonate, this is not a comprehensive list. The use of diphenyl carbonate is preferred.

These carbonic esters may also be used singly, or a combination of two or more types may be used.

In addition, a dicarboxylic acid or a dicarboxylic ester may also be contained as an acid component. Examples of dicarboxylic acids and dicarboxylic esters include terephthalic acid, isophthalic acid, diphenyl terephthalate, diphenyl isophthalate, and other such aromatic dicarboxylic acids; succinic acid, glutaric acid, adipic acid, pimelic acid, suberic acid, azelaic acid, sebacic acid, decanoic acid, dodecanoic acid, diphenyl sebacate, diphenyl decanedioate, diphenyl dodecanedioate, and other such aliphatic dicarboxylic acids; and cyclopropanedicarboxylic acid, 1,2-cyclobutanedicarboxylic acid, 1,3-cyclopentanecarboxylic acid, 1,2-cyclohexanedicarboxylic acid, 1,3-cyclohexanedicarboxylic acid, 1,4-cyclohexanedicarboxylic acid, diphenyl cyclopropanedicarboxylate, diphenyl 1,2-cyclobutanedicarboxylate, diphenyl 1,3-cyclobutanedicarboxylate, diphenyl 1,2-cyclopentanedicarboxylate, diphenyl 1,3-cyclopentanedicarboxylate, diphenyl 1,2-cyclohexanedicarboxylate, diphenyl 1,4-cyclohexanedicarboxylate, and other such alicyclic dicarboxylic acids.

These dicarboxylic acids and dicarboxylic esters may be used singly, or a combination of two or more types may be used.

The dicarboxylic acid or dicarboxylic ester should be contained in the above-mentioned carbonic diester in an amount of 50 mol% or less, and preferably 30 mol% or less.

In the manufacture of the aromatic dihydroxy compound, it is also possible to use a polyfunctional compound having three or more functional groups per molecule along with the aromatic dihydroxy compound and the carbonic diester. A compound having phenolic hydroxyl groups or carboxyls is preferable as this polyfunctional compound, and a compound having three phenolic hydroxyl groups is particularly favorable.

Specific examples of this compound include 1,1,1-tris(4-hydroxyphenyl) ethane, 2,2',2"-tris(4-hydroxyphenyl) diisopropylbenzene, α-methyl-α,α',α"-tris(4-hydroxyphenyl)-1,4-diethylbenzene, α,α',α"-tris(4-hydroxyphenyl)-1,3,5-triisopropylbenzene, fluoroglycine, 4,6-dimethyl-2,4,6-tri(4-hydroxyphenyl)heptane-2, 1,3,5-tri(4-hydroxyphenyl) propane, trimellitic acid, 1,3,5-benzenetricarboxylic acid, and pyromellitic acid.

The use of 1,1,1-tris(4-hydroxyphenyl)ethane, α,α',α"-tris(4-hydroxyphenyl)-1,3,5-triisopropylbenzene, or the like is particularly favorable.

The polyfunctional compound can be used in an amount of 0.03 mol or less, with 0.001 to 0.025 mol being preferable and 0.01 to 0.02 mol being particularly favorable, per mole of the aromatic dihydroxy compound.

The amount of terminal hydroxyl groups in the aromatic polycarbonate is a function of the molar ratio of the aromatic dihydroxy compound and carbonic diester raw materials. For instance, when bisphenol A is used as the aromatic dihydroxy compound and diphenyl carbonate as the carbonic diester, the terminal groups of the polycarbonate are (i) phenol residue groups originating in the bisphenol A, and (ii) phenyl groups originating in the diphenyl carbonate. As the molar ratio of the bisphenol A is raised, there is an increase in the equivalent ratio (i)/(ii) of the phenolic terminal groups (i) and non-phenolic terminal groups (ii) in the polycarbonate that is produced.

In general, when a polycarbonate is manufactured by melt process, the molar ratio of the bisphenol A, the aromatic dihydroxy compound, is greater, and the amount of phenolic terminal groups of the aromatic polycarbonate thus obtained is at least 5% of the total polymer terminal groups.

In the manufacture of a polycarbonate by melt process in this manner, an alkali metal compound or alkaline earth metal compound and a basic compound are usually used as catalysts. Specific examples of the alkali metal compound or alkaline earth metal compound include organic acid salts, inorganic acid salts, oxides, hydroxides, hydrides, alcoholates, and so on of alkali metals and alkaline earth metals.

In more specific terms, examples of alkali metal compounds include sodium hydroxide, potassium hydroxide, lithium hydroxide, sodium hydrogencarbonate, potassium hydrogencarbonate, lithium hydrogencarbonate, sodium carbonate, potassium carbonate, lithium carbonate, sodium acetate, potassium acetate, lithium acetate, sodium stearate, potassium stearate, lithium stearate, sodium borohydride, potassium borohydride, lithium borohydride, sodium borophenide, sodium benzoate, potassium benzoate, lithium benzoate, disodium hydrogenphosphate, dipotassium hydrogenphosphate, dilithium hydrogenphosphate, a disodium salt, dipotassium salt, or dilithium salt of bisphenol A, and a sodium salt, potassium salt, or lithium salt of phenol.

Specific examples of alkaline earth metal compounds include calcium hydroxide, barium hydroxide, magnesium hydroxide, strontium hydroxide, calcium hydrogencarbonate, barium hydrogencarbonate, magnesium hydrogencarbonate, strontium hydrogencarbonate, calcium carbonate, barium carbonate, magnesium carbonate, strontium carbonate, calcium acetate, barium acetate, magnesium acetate, strontium acetate, calcium stearate, barium stearate, magnesium stearate, and strontium stearate.

The alkali metal compound or alkaline earth metal compound can also be a combination of two or more of the above compounds. It is also possible to use a combination of an alkali metal compound and an alkaline earth metal compound.

This alkali metal compound or alkaline earth metal compound should be used in an amount of $1 \times 10^{-8}$ to $1 \times 10^{-4}$ mol, with $1.5 \times 10^{-7}$ to $2 \times 10^{-6}$ mol being preferable and $1 \times 10^{-7}$ to $8 \times 10^{-7}$ mol being particularly favorable, per mole of the above-mentioned aromatic dihydroxy compound.

A polymer can be manufactured at a high level of polymerization activity if the alkali metal compound or alkaline earth metal compound is used as a catalyst in an amount of $1 \times 10^{-8}$ to $1 \times 10^{-4}$ mol per mole of aromatic dihydroxy compound.

A basic compound is used along with the alkali metal compound or alkaline earth metal compound. This basic compound should readily decompose at high temperatures, for example. The following compounds are specific examples: tetramethylammonium hydroxide ($Me_4NOH$), tetraethylammonium hydroxide ($Et_4NOH$), tetrabutylammonium hydroxide ($Bu_4NOH$), trimethylbenzylammonium hydroxide ($(\phi\text{-}CH_2)(Me)_3NOH$), and other such ammonium hydroxides that have alkyl, aryl, aralkyl, or other such groups; trimethylamine, triethylamine, dimethylbenzylamine, triphenylamine, and other such tertiary amines; secondary amines expressed by $R_2NH$ (where R is a methyl, ethyl, or other alkyl, a phenyl, tolyl, or other aryl group, or the like); primary amines expressed by $RNH_2$ (where R is defined the same as above); 2-methylimidazole, 2-phenylimidazole, and other such imidazoles; guanidines; ammonia, tetramethylammonium borohydride ($Me_4NBH_4$), tetrabutylammonium borohydride ($BU_4NBH_4$), tetrabutylammonium tetraphenylborate ($BU_4NB(Ph)_4$), tetramethylammonium tetraphenylborate ($Me_4NB(Ph)_4$), and other such basic salts; and tetramethylphosphonium hydroxide, tetraethylphosphonium hydroxide, tetraphenylphosphonium hydroxide, and other such phosphonium compounds.

Of these, tetraalkylammonium hydroxides, and especially electronics-use tetraalkylammonium hydroxides with a low impurity content, can be used to particular advantage.

The above basic compounds should be used in an amount of $1 \times 10^{-6}$ to $1 \times 10^{-1}$ mol, with $1 \times 10^{-5}$ to $1 \times 10^{-2}$ mol being preferable, per mole of aromatic dihydroxy compound.

It is preferable for a combination of an alkali metal compound or an alkaline earth metal compound and a basic compound to be used as a catalyst in the above amounts because the polycondensation reaction will proceed sufficiently fast and a high molecular weight polymer can be produced at a high level of polymerization activity.

When a catalyst as described above is used in a melt process, an acidic compound should be added to the

reaction product to neutralize it or weaken the alkalinity. This acidic compound can be benzenesulfonic acid, p-toluenesulfonic acid, or another sulfonic acid; methyl benzenesulfonate, ethyl benzenesulfonate, butyl benzenesulfonate, octyl benzenesulfonate, phenyl benzenesulfonate, methyl p-toluenesulfonate, ethyl p-toluenesulfonate, butyl p-toluenesulfonate, octyl p-toluenesulfonate, phenyl p-toluenesulfonate, or another sulfonic ester; or the like.

Unlike a phosgene process, a melt process basically does not involve any refining, so the polymer should be subjected to a reduced pressure treatment after the neutralization of the catalyst.

There are no particular restrictions on the treatment apparatus used in this reduced pressure treatment, but a reactor equipped with a reduced pressure apparatus may be used, or an extruder equipped with a reduced pressure apparatus may be used, for example.

The reactor here may be a vertical tank type of reactor or a horizontal tank type of reactor, but the use of a horizontal tank reactor is preferred.

The reduced pressure treatment performed using the above-mentioned reactor is carried out at a pressure of 0.05 to 750 mmHg, and preferably 0.05 to 5 mmHg.

When this reduced pressure treatment is performed using an extruder, it should last about 10 seconds to 15 minutes, and it should last about 5 minutes to 3 hours when a reactor is used. It is preferable for the reduced pressure treatment to be performed at a temperature of about 240 to 350°C.

When the reduced pressure treatment is performed in an extruder, a vented uniaxial or biaxial extruder may be used, and the material can be pelletized while the reduced pressure treatment is performed in the extruder.

When the reduced pressure treatment is performed in an extruder, it is performed at a pressure of 1 to 750 mm Hg, and preferably 5 to 700 mmHg.

Performing the above treatment reduces or completely eliminates the raw material monomers remaining in the polycarbonate.

There are no particular restrictions on the molecular weight of the aromatic polycarbonate, but an intrinsic viscosity (η) of 0.3 to 0.7 (measured with an Ubellohde viscometer at 20°C in methylene chloride) is preferable for practical purposes.

The aromatic polycarbonate resin containing hydroxyl groups in a proportion of at least 5% versus the total polymer terminal end groups (A) used in the present invention is itself thermally stable, but if metal ions of a certain type are present, there is the possibility that they will react with the above-mentioned hydroxyl groups and result in discoloration during molding and working. These metal ions can become admixed not only during the manufacture of the polycarbonate, but also from the screw or barrel inside the molding machine during molding. Therefore, the aromatic polycarbonate resin composition of the present invention is characterized by containing a very small amount of phosphorous acid along with the above-mentioned aromatic polycarbonate resin. The phosphorous acid is added in an amount of at least 0.00001 weight part and less than 0.0002 weight part per 100 weight parts aromatic polycarbonate resin, at which amount good thermal stability, and color stability in particular, will be exhibited. It is preferable for the amount in which the phosphorous acid is added to be at least 0.00002 weight part, with at least 0.00005 weight part being even better, and no more than 0.00015 weight part, with no more than 0.0001 weight part being even better. Good thermal stability can be preserved even if the amount is over the above range, but there will be a marked decrease in hydrolysis resistance.

The resin composition of the present invention can also contain, in addition to the above components, (C) one or more types of additive selected from the group consisting of thermal stabilizers, acidic substance scavengers, weatherproofing agents, and parting agents, in an amount of no more than about 0.5 weight part, and preferably 0.001 to 0.5 weight part. Component (C) is used as needed, and can be a single additive or a combination thereof.

The thermal stabilizer is used in order to further improve the thermal stability of the aromatic polycarbonate. In specific terms, a phosphorous acid ester and/or a phenol-based antioxidant can be used. Examples of phosphorous acid esters are expressed by the following formula, for example.

$$P(OR^c)_3 \qquad (V)$$

In the above formula, $R^c$ is an alicyclic hydrocarbon group, an aliphatic hydrocarbon group, or an aromatic hydrocarbon group, and the various $R^c$ groups may be the same or different.

Specific examples include trimethyl phosphite, triethyl phosphite, tributyl phosphite, trioctyl phosphite, tris (2-ethylhexyl) phosphite, trinonyl phosphite, tridecyl phosphite, trioctadecyl phosphite, tristearyl phosphite, tris(2-chloroethyl) phosphite, tris(2,3-dichloropropyl) phosphite, and other such trialkyl phosphites; tricyclohexyl phosphite and other such tricycloalkyl phosphites; triphenyl phosphite, tricresyl phosphite, tris(ethylphenyl) phosphite, tris(2,4-di-t-butylphenyl) phosphite, tris(nonylphenyl) phosphite, tris(hydroxyphenyl) phosphite, and other such trisaryl phosphites; and phenyldidecyl phosphite, diphenyldecyl phosphite, diphenylisooctyl phosphite, phenylisooctyl phosphite, 2-ethylhexyldiphenyl phosphite, and other such arylalkyl phosphites.

Other examples of phosphorous acid esters include distearyl pentaerythrityl diphosphite and bis(2,4-di-t-butylphenyl) pentaerythrityl diphosphite.

These compounds can be used singly or as a combination.

Of these, an aromatic phosphorous acid ester is preferable, and tris(2,4-di-t-butylphenyl) phosphite can be used to particular advantage.

The phenol-based antioxidant is any phenol-based compound that is ordinarily used as an antioxidant in this field. In particular, any hindered phenol-based compound can be used. Specific examples include n-octadecyl-3-(4-hydroxy-3',5'-di-t-butylphenyl) propionate, tetrakis[methylene-3-(3',5'-di-t-butyl-4-hydroxyphenyl) propionate] methane, 1,1,3-tris(2-methyl-4-hydroxy-5-t-butylphenyl) butane, distearyl(4-hydroxy-3-methyl-5-t-butylphenyl) benzyl malonate, and 4-hydroxymethyl-2,6-di-t-butylphenol. These may be used singly or as a combination of two or more types.

The thermal stabilizer is used when needed as dictated by the amount of the phosphorous acid (B) and the purity (that is, the amount of impurities, and particularly metal ions) of the aromatic polycarbonate (A). The main effect of this addition is that it prevents a decrease in molecular weight during heating. When a single phosphorous acid ester is used, the amount added is usually 0.1 weight part or less, and preferably 0.05 weight part or less, and even more preferably 0.03 weight part or less, and preferably at least 0.0005 weight part, and even more preferably at least 0.001 weight part, per 100 weight parts of aromatic polycarbonate. When a single phenol-based antioxidant is used, the added amount is 0.1 weight part or less, and preferably 0.05 weight part or less, and even more preferably 0.03 weight part or less, and preferably at least 0.0005 weight part, and even more preferably at least 0.001 weight part per 100 weight parts of the aromatic polycarbonate. Within these ranges, the additives will serve to enhance thermal stability, and will be ideal in terms of avoiding hydrolysis and preventing the fouling of the mold. A combination of a phosphorous acid ester and a phenol-based antioxidant can also be used.

A compound having one or more epoxy groups per molecule, for example, is used as the acidic substance scavenger. Specific examples include epoxidized soybean oil, epoxidized linseed oil, phenyl glycidyl ether, allyl glycidyl ether, t-butylphenyl glycidyl ether, 3,4-epoxycyclohexylmethyl-3',4'-epoxycyclohexyl carboxylate, 3,4-epoxy-6-methylcyclohexylmethyl-3',4'-epoxy-6'-methylcyclohexyl carboxylate, 2,3-epoxycyclohexylmethyl-3',4'-epoxycyclohexyl carboxylate, 4-(3,4-epoxy-5-methylcyclohexyl)butyl-3',4'-epoxycyclohexyl carboxylate, 3,4-epoxycyclohexyl ethylene oxide, cyclohexylmethyl-3,4-epoxycyclohexyl carboxylate, 3,4-epoxy-6-methylcyclohexylmethyl-6'-methylcyclohexyl carboxylate, bisphenol A diglycidyl ether, tetrabromobisphenol A glycidyl ether, diglycidyl ester of phthalic acid, diglycidyl ester of hexahydrophthalic acid, bis-epoxydicyclopentadienyl ether, bis-epoxyethylene glycol, bis-epoxycyclohexyl adipate, butadiene diepoxide, tetraphenyl ethylene oxide, octyl epoxyphthalate, polybutadiene epoxide, 3,4-dimethyl-1,2-epoxycyclohexane, 3,5-dimethyl-1,2-epoxycyclohexane, 3-methyl-5-t-butyl-1,2-epoxycyclohexane, octadecyl-2,2-dimethyl-3,4-epoxycyclohexyl carboxylate, N-butyl-2,2-dimethyl-3,4-epoxycyclohexyl carboxylate, cyclohexyl-2-methyl-3,4-epoxycyclohexyl carboxylate, N-butyl-2-isopropyl-3,4-epoxy-5-methylcyclohexyl carboxylate, octadecyl-3,4-epoxycyclohexyl carboxylate, 2-ethylhexyl-3',4'-epoxycyclohexyl carboxylate, 4,6-dimethyl-2,3-epoxycyclohexyl-3',4'-epoxycyclohexyl carboxylate, 4,5-epoxytetrahydrophthalic anhydride, 3-t-butyl-4,5-epoxytetrahydrophthalic anhydride, diethyl-4,5-epoxy-*cis*-1,2-cyclohexyl dicarboxylate, and di-n-butyl-3-t-butyl-4,5-epoxy-*cis*-1,2-cyclohexyl dicarboxylate. Of these, the use of an alicyclic epoxy compound is preferred, and the use of 3,4-epoxycyclohexylmethyl-3',4'-epoxycyclohexyl carboxylate is particularly favorable. These compounds may be used singly or as a mixture of two or more types.

The purpose of the acidic substance scavenger is to scavenge any components that exhibit acidity, mainly so that there will be no adverse effect on hydrolysis resistance. The acidic substance scavenger is added if needed according to the added amount of the phosphorous acid (component (B)) and the added amount of the above-mentioned thermal stabilizer. It is usually added in an amount of 0.1 weight part or less, and preferably 0.005 weight part or less, and even more preferably 0.003 weight part or less, and preferably at least 0.0005 weight part, and even more preferably at least 0.001 weight part, per 100 weight parts of the aromatic polycarbonate.

A weatherproofing agent is used when the intended application calls for weather resistance. A benzotriazole-based compound is an example of a weatherproofing agent. Specific examples include 2-(2'-hydroxy-5'-methylphenyl) benzotriazole, 2-(2'-hydroxy-3',5'-di-t-butyl-phenyl)benzotriazole, 2-(2'-hydroxy-3'-t-butyl-5'-methyl-phenyl)-5-chlorobenzotriazole, 2-(2'-hydroxy-3',5'-di-t-butyl-phenyl)-5-chlorobenzotriazole, 2-(2'-hydroxy-5'-t-octylphenyl)benzotriazole, 2-(2'-hydroxy-3',5'-di-t-amylphenyl)benzotriazole, 2-[2"-hydroxy-3'-(3",4",5",6"-tetrahydrophthalimidemethyl)-5'-methylphenyl]benzotriazole, and 2,2'-methylenebis [4-(1,1,3,3-tetramethylbutyl)-6-(2H-benzotriazol-2-yl)phenol].

The amount of the weatherproofing agent is usually 0.5 weight part or less, and preferably 0.4 weight part or less, and even more preferably 0.3 weight part or less and preferably at least 0.05 weight part, and more preferably at least 0.1 weight part per 100 weight parts of the aromatic polycarbonate.

The parting agent can be one or more types of compound selected from the group consisting of olefin-based compounds, silicone-based compounds, and partial and full esters of polyhydric alcohols and aliphatic carboxylic acids. There are no particular restrictions on the polyhydric alcohol, which can be dihydric, trihydric, tetrahydric, pentahydric,

hexahydric, and so on, but ethylene glycol, glycerol, trimethylolpropane, pentaerythritol, and the like are favorable. There are no particular restrictions on the aliphatic carboxylic acid, and saturated and unsaturated aliphatic carboxylic acids can both be used. For instance, a hydrogenated animal oil can be used. A saturated monovalent fatty acid is preferred as the carboxylic acid, and one with a carbon number of 12 to 24 is particularly favorable. If the carbon number is outside this range, the thermal stability of the resin composition will tend to be inferior to that when the carbon number is within the above range, and gas will also tend to be generated. Specific examples of the above-mentioned aliphatic carboxylic acid include dodecylic acid, myristic acid, pentadecylic acid, palmitic acid, pentadecylic acid, stearic acid, nonadecanoic acid, arachic acid, behenic acid, and lignoceric acid. An example of an olefin-based compound is an $\alpha$-olefin oligomer.

A parting agent is used when partability is required, and the amount thereof is usually 0.5 weight part or less, and preferably 0.4 weight part or less, and even more preferably 0.3 weight part or less, and preferably at least 0.005 weight part and more preferably at least 0.01 weight part per 100 weight parts of the aromatic polycarbonate.

To the extent that the object of the present invention is not compromised, the resin composition of the present invention can also contain pigments, dyes, strengtheners, fillers, flame retardants, lubricants, plasticizers, antistatic agents, and the like.

There are no particular restrictions on the method for manufacturing the resin composition of the present invention, and any ordinary method can be used satisfactorily. Still, a melt mixing method is generally preferable. The use of a small amount of solvent is also possible, but there is generally no need. Examples of the apparatus used here include an extruder, a Banbury mixer, a roller, and a kneader. These can be operated in either batch or continuous mode.

## Examples

The present invention will now be described in further detail through examples, but the present invention is not limited to or by these examples.

The following substances were used in the examples and comparative examples.

(A) Polycarbonate having hydroxyl groups at its terminals

Manufactured as follows:

0.44 kmol of bisphenol A (BPA) (used as the aromatic dihydroxy compound) and 0.46 kmol of diphenyl carbonate (used as the carbonic diester) were supplied to a 250 L tank agitator. The atmosphere was replaced with nitrogen, after which the contents were melted at 140°C.

The system was then heated to a temperature of 180°C, 0.000176 mol ($4 \times 10^{-7}$ mol/mol of bisphenol A) of sodium hydroxide and 0.11 mol ($2.5 \times 10^{-4}$ mol/mol of bisphenol A) of tetramethylammonium hydroxide were added as catalysts, and the system was agitated for 30 minutes.

Next, the temperature was raised to 210°C while the pressure was gradually lowered to 200 mmHg at the same time. 30 minutes later the temperature was raised to 240°C while the pressure was gradually lowered to 15 mmHg at the same time, the temperature and pressure were held steady, and the amount of phenol that was distilled off was measured. The system was returned to atmospheric pressure with nitrogen at the point when no more phenol was distilled off. The time required for the reaction was 1 hour. The intrinsic viscosity ($\eta$) of the reaction product thus obtained was 0.15 dL/ g.

This reaction product was put under pressure with a gear pump and conveyed to a centrifugal thin film evaporator, where the reaction was allowed to proceed. The temperature and pressure of the thin film evaporator were kept at 270°C and 2 mmHg. The contents were fed by gear pump from the bottom of the evaporator at a rate of 40 kg/hour to a biaxial, horizontal, agitated polymerization tank (L/D = 3, agitation impeller diameter: 220 mm, internal volume: 80 liters), and were polymerized at a residence time of 30 minutes.

Next, while still molten, this polymer was conveyed by gear pump into a biaxial extruder (L/D = 17.5, barrel temperature: 285°C), 0.7 ppm butyl p-toluenesulfonate was added to and kneaded with the resin, this product was extruded from the die in the form of a strand, and this was cut into pellets.

The intrinsic viscosity ($\eta$) of the polymer thus obtained was 0.51 dL/g. Phenolic terminal groups accounted for 12% of all the terminals. This polycarbonate shall be referred to as PC.

The OH group concentration of the phenolic terminal groups was determined by measuring the absorption intensity of FTIR at 3600 $cm^{-1}$. The total terminal group concentration was calculated by determining the average molecular weight on the basis of the IV (intrinsic viscosity) value measured for a methylene chloride solution. Schnell's formula, $IV = 1.23 \times 10^{-4} M^{0.83}$ (M = viscosity average molecular weight), was used in the conversion of the IV value into the average molecular weight.

(B) Phosphorous acid

This was used in the form of a 50% aqueous solution (the values in Table 1 are the amount of phosphorous

acid).

(C) Additives
Thermal stabilizer:

Stab. 1: phosphorous acid ester (tris(2,4-di-t-butylphenyl) phosphite)
Stab. 2: phenol-based antioxidant (n-octadecyl-3-(4-hydroxy-3',5'-di-t-butylphenyl propionate)
Acidic substance scavenger:
3,4-epoxycyclohexylmethyl-3',4'-epoxycyclohexyl carboxylate
Weatherproofing agent
benzotriazole-based compound: 2-(2'-hydroxy-5'-t-octylphenyl) benzotriazole
Parting agent
pentaerythritol tetrastearate

Examples 1 to 4 and Comparative Examples 1 to 7

(1) Manufacture of resin composition

The phosphorous acid of component (B) an the additive of component (C) were blended in the proportions given in Table 1 with 100 weight parts of the polycarbonate (PC) obtained above. This mixture was melt kneaded at 280°C in a uniaxial extruder (L/ D =17.5) to produce pellets.

(2) Evaluation

This was conducted as follows.

Color:

An injection molded article with a thickness of 3.0 mm was produced at a cylinder temperature of 280°C and a mold temperature of 80°C using a 150 ton molding machine (made by Oguma). Using this molded article, the X, Y, and Z values were measured by transmission method using a Color and Color Difference Meter ND-1001 DP made by Nihon Denshoku Kogyo, and the yellow index (YI) was measured.

$$YI = 100 \times (1.277X - 1.060Z)/Y$$

Optical transmissivity:

This was measured according to the method in ASTM D 1003, using the above-mentioned molded article.

Haze:

The haze of the above-mentioned molded article was measured using an NDH-200 made by Nihon Denshoku Kogyo.

Hydrolysis resistance:

The above-mentioned molded article was put in an autoclave filled with water, and was aged for 5 days in a 120°C oven. The haze after the test was measured and used as an index of hydrolysis.

Residence stability

The resin was allowed to reside in the cylinder of the above-mentioned molding machine for 15 minutes at a temperature of 320°C, after which it was molded at the same temperature, and the yellow index (YI) was measured.
The results of the above evaluations are given in Table 1.

**Table 1**

| | Examples | | | | Comparative Examples | | | | | | |
|---|---|---|---|---|---|---|---|---|---|---|---|
| | 1 | 2 | 3 | 4 | 1 | 2 | 3 | 4 | 5 | 6 | 7 |
| Substance (weight parts) | | | | | | | | | | | |
| P C | 100 | 100 | 100 | 100 | 100 | 100 | 100 | 100 | 100 | 100 | 100 |
| Phosphorous acid | 0.0015 | 0.0001 | 0.00005 | 0.0001 | 0 | 0.0002 | 0.0003 | 0.0004 | 0.0005 | 0.001 | 0.0005 |
| Stabilizer | | | | | | | | | | | |
| Stab.-1 | 0 | 0 | 0 | 0.025 | 0 | 0 | 0 | 0 | 0 | 0 | 0.025 |
| Stab.-2 | 0 | 0 | 0 | 0.01 | 0 | 0 | 0 | 0 | 0 | 0 | 0.01 |
| Acidic substance scavenger | 0 | 0 | 0 | 0.01 | 0 | 0 | 0 | 0 | 0 | 0 | 0.01 |
| Weatherproofing agent | 0 | 0 | 0 | 0.2 | 0 | 0 | 0 | 0 | 0 | 0 | 0.2 |
| Parting agent | 0 | 0 | 0.2 | 0 | 0 | 0 | 0 | 0 | 0 | 0 | 0.2 |
| Evaluation | | | | | | | | | | | |
| YI (initial) | 1.4 | 1.4 | 1.5 | 1.4 | 1.5 | 1.4 | 1.4 | 1.3 | 1.3 | 1.2 | 1.2 |
| YI (after residence) | 1.8 | 1.8 | 1.9 | 1.5 | 2.1 | 1.8 | 1.7 | 1.6 | 1.6 | 1.3 | 1.2 |
| Haze (initial) | 0.1 | 0.1 | 0.1 | 0.2 | 0.2 | 0.1 | 0.1 | 0.1 | 0.1 | 0.1 | 0.1 |
| Haze (after hydrolysis resistance test) | 2.2 | 1.9 | 0.3 | 0.4 | 0.3 | 6.2 | 9.1 | 13.7 | 36.2 | 71 | 13.5 |

The resin composition of the present invention has excellent thermal stability, color stability, and hydrolysis resistance, and also fouls the mold extremely little over long-term molding. Thus, this resin is favorable for applications where transparency is required, such as lenses, optical disks, and other such optical applications, as well as for all construction materials such as sheeting and films. Also, this stability can be put to good use in alloys with other polymers and in reinforced polycarbonate resins containing a filler, so the industrial utility value of the present invention is enormous.

## Claims

1. An aromatic polycarbonate resin composition comprising:

   (A) 100 weight parts of an aromatic polycarbonate resin that contains hydroxyl groups in a proportion of at least 5% of the total polymer terminal end groups; and
   (B) at least 0.00001 weight part and less than 0.0002 weight part phosphorous acid.

2. A composition as defined in Claim 1, wherein the aromatic polycarbonate resin (A) is manufactured by means of a melt polymerization reaction between an aromatic dihydroxy compound and a carbonic diester.

3. A composition as defined in Claim 2, wherein, in the melt polymerization reaction, an alkali metal compound or alkaline earth metal compound is used as a catalyst in an amount of $\times 10^{-8}$ to $1 \times 10^{-4}$ mol per mole of aromatic dihydroxy compound, and a basic compound is used in an amount of $1 \times 10^{-6}$ to $\times 10^{-1}$ mol per mole of aromatic dihydroxy compound.

4. A composition as defined in Claim 1, further containing (C) no more than 0.5 weight part of one or more types of additive selected from the group consisting of thermal stabilizers, acidic substance scavengers, weatherproofing agents, and parting agents.

5. A composition as defined in Claim 4, wherein, in component (C), the thermal stabilizer is one or more compounds selected from among phosphorous esters and phenol-based antioxidants.

6. A composition as defined in Claim 4, wherein, in component (C), the acidic substance scavenger is a compound that has at least one epoxy group in its molecule.

7. A composition as defined in Claim 4 wherein, in component (C), the weatherproofing agent is a benzotriazole-based compound.

8. A composition as defined in Claim 4 wherein, in component (C), the parting agent is one or more types of compound selected from the group consisting of partial and full esters of polyhydric alcohols and aliphatic carboxylic acids, silicone-based compounds, and olefin-based compounds.

European Patent Office

# EUROPEAN SEARCH REPORT

Application Number
EP 98 30 7824

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 335 239 A (IDEMITSU PETROCHEMICAL CO) 4 October 1989<br>* page 3, line 11 - line 15 *<br>* page 4, line 45 - line 51 *<br>* claim 1 * | 1-8 | C08K3/32<br>C08K13/02<br>//(C08K13/02, 3:32,5:00) |
| X | NL 8 601 409 A (GEN ELECTRIC) 4 January 1988<br>* page 3, paragraph 1 *<br>* claims 1,2 * | 1-8 | |
| | | | TECHNICAL FIELDS SEARCHED (Int.Cl.6) |
| | | | C08K |

The present search report has been drawn up for all claims

| Place of search | Date of completion of the search | Examiner |
|---|---|---|
| THE HAGUE | 14 December 1998 | Siemens, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 98 30 7824

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-1998

| Patent document cited in search report | Publication date | Patent family member(s) | Publication date |
|---|---|---|---|
| EP 0335239 A | 04-10-1989 | JP 1249855 A | 05-10-1989 |
| | | JP 2109266 C | 21-11-1996 |
| | | JP 8006015 B | 24-01-1996 |
| | | JP 1249856 A | 05-10-1989 |
| | | CA 1327661 A | 08-03-1994 |
| | | US 5055508 A | 08-10-1991 |
| | | US 5240986 A | 31-08-1993 |
| NL 8601409 A | 04-01-1988 | NONE | |

EPO FORM P0459

For more details about this annex : see Official Journal of the European Patent Office, No. 12/82